# EUROPÄISCHE PATENTSCHRIFT

(11) **EP 3 634 894 B1**
(45) Veröffentlichungstag und Bekanntmachung des Hinweises auf die Patenterteilung: **12.04.2023**
(21) Anmeldenummer: 18755537.0
(22) Anmeldetag: 08.06.2018
(51) Int. Cl.: B65G 47/91, B65G 54/02

(54) **FÖRDERSYSTEM MIT SELEKTIVER UNTERDRUCKVERSORGUNG DER LAUFWAGEN**
CONVEYOR SYSTEM WITH SELECTIVE SUPPLY OF NEGATIVE PRESSURE TO THE CARRIAGES
SYSTÈME DE TRANSPORT DONT LES CHARIOTS SONT ALIMENTÉS SÉLECTIVEMENT EN PRESSION NÉGATIVE

(30) Priorität: 08.06.2017 US 201762517106 P
(43) Veröffentlichungstag der Anmeldung: 15.04.2020
(73) Patentinhaber: Beckhoff Automation GmbH, 33415 Verl (DE)
(72) Erfinder: CALABRESE, Roger, Bradenton, FL 34202 (US); PEEBLES, Scott, Bradenton, FL 34202 (US); WATMOUGH, Oliver, Sarasota, FL 34231 (US)
(74) Vertreter: Patentanwaltskanzlei WILHELM & BECK
(86) Internationale Anmeldenummer: PCT/IB2018/054143
(87) Internationale Veröffentlichungsnummer: WO 2018/225021

(56) Entgegenhaltungen:
- EP-A1- 2 116 489
- EP-A1- 2 551 219
- DE-C1- 19 803 617
- US-A- 6 155 555
- US-A1- 2015 230 369

## Beschreibung

Die vorliegende Erfindung betrifft industrielle Fördersysteme und insbesondere Fördersysteme für die Verpackungsindustrie unter Anwendung von Unterdruck.

Unterdruck wird aus verschiedenen Gründen in vielen automatisierten industriellen Prozessen - einschließlich in der Verpackungsindustrie - eingesetzt. Wird ein bewegtes Teil und/oder ein bewegtes Werkzeug mit Unterdruck beaufschlagt, müssen bei der Zuführung des Unterdruckes besondere Vorkehrungen getroffen werden. In der Verpackungsindustrie werden in vielen Verpackungsmaschinen mehrere Laufwagen (teilweise unabhängig voneinander bewegbar) eingesetzt, die eine vollständig umlaufend ausgebildete Förderstrecke umfahren. Die Bereitstellung von Unterdruck über derartige Laufwagen stellt eine besondere konstruktive Herausforderung dar.

Aus der Druckschrift EP 2 116 489 A1 ist eine Transportvorrichtung mit Vakuumversorgung bekannt.

US6155555A offenbart ein Fördersystem nach dem Oberbegriff des Anspruchs 1.

Es ist daher die Aufgabe der vorliegenden Erfindung, ein Fördersystem mit selektiver Unterdruckversorgung der Laufwagen bereitzustellen. Diese Aufgabe wird erfindungsgemäß durch das Fördersystem gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Mit der vorliegenden Erfindung wird ein Fördersystem bereitgestellt, wobei das Fördersystem eine sich entlang einer Förderstrecke erstreckende Führungsschiene und mindestens einen Laufwagen mit einem Befestigungsabschnitt aufweist, wobei der Befestigungsabschnitt verschiebbar in die Führungsschiene eingreift und wobei in dem Befestigungsabschnitt ein Unterdruckanschluss ausgebildet ist.

Es ist ein Antriebsmechanismus zum Bewegen des mindestens einen Laufwagens entlang der Förderstrecke vorgesehen. Mehrere Unterdruckventile sind mit der Führungsschiene entlang der Förderstrecke verbunden und eine Unterdruckquelle ist mit den mehreren Unterdruckventilen verbunden, um diese mit Unterdruck zu versorgen. Das Fördersystem ist dazu ausgelegt, dass es den Unterdruckanschluss des mindestens einen Laufwagens über die Unterdruckventile selektiv mit Unterdruck versorgt, und zwar bei einer benachbarten Anordnung des mindestens einen Laufwagens zu den Unterdruckventilen.

Unter einer "Versorgung mit Unterdruck bei einer benachbarten Anordnung des mindestens einen Laufwagens zu den Unterdruckventilen" ist im Rahmen der vorliegenden Erfindung auch zu verstehen, dass die Versorgung des Unterdruckanschlusses des Laufwagens mit Unterdruck selektiv über diejenigen Unterdruckventile erfolgt, in deren Nähe sich der Laufwagen befindet.

Bevorzugt ist die Führungsschiene zwischen den mehreren Unterdruckventilen im Wesentlichen durchgehend ausgebildet.

Gemäß der Erfindung weist die Führungsschiene einander gegenüberliegende erste und zweite Führungsschienenflächen auf, die sich entlang der Förderstrecke erstrecken, wobei der Befestigungsabschnitt eine erste und eine zweite Seite aufweist, und die erste und die zweite, sich gegenüberliegende Seite des Befestigungsabschnitts jeweils verschiebbar in die erste beziehungsweise zweite Führungsschienenfläche eingreifen.

Besonders bevorzugt sind die mehreren Unterdruckventile mit Öffnungen verbunden, die sich durch die erste Führungsschienenfläche erstrecken.

Gemäß der Erfindung umfasst der Unterdruckanschluss gegenüberliegende erste und zweite Unterdruckeinlässe, wobei die ersten und zweiten Unterdruckeinlässe jeweils an der ersten beziehungsweise der zweiten Seite des Befestigungsabschnitts angeordnet sind.

Gemäß der Erfindung umfasst der Befestigungsabschnitt sich gegenüberliegende erste und zweite Unterdruckdichtungen, die jeweils an der ersten Seite und der zweiten Seite des Befestigungsabschnitts um die ersten und zweiten Unterdruckeinlässe herum angeordnet sind und mit der ersten beziehungsweise zweiten Führungsschienenfläche in Eingriff stehen.

Gemäß der Erfindung umfasst der Befestigungsabschnitt ferner eine erste und eine zweite Unterdruckeinlassplatte, durch welche die ersten und zweiten Unterdruckeinlässe jeweils definiert sind, und auf denen die ersten und zweiten Unterdruckdichtungen jeweils gelagert sind, wobei die erste und die zweite Unterdruckeinlassplatte derart vorgespannt sind, um mit den ersten und zweiten Führungsschienenflächen in Eingriff zu gelangen.

Daneben kann vorgesehen werden, dass der Unterdruckanschluss ferner gegenüberliegende dritte und vierte Unterdruckeinlässe umfasst, wobei die dritten und vierten Unterdruckeinlässe jeweils an der ersten beziehungsweise der zweiten Seite des Befestigungsabschnitts angeordnet sind.

Vorteilhafterweise sind die erste und die zweite Seite des Befestigungsabschnitts verschiebbar zwischen der ersten und der zweiten Führungsschienenfläche aufgenommen.

Bevorzugt ist der mindestens eine Laufwagen dazu ausgelegt, einen Unterdruck von dem Unterdruckanschluss derart einzusetzen, um ein Werkstück lösbar an dem Laufwagen zu befestigen.

Gemäß einer insbesondere bevorzugten Ausführungsform der vorliegenden Erfindung weist das Fördersystem zusätzlich eine Steuerung auf, wobei die Steuerung in kommunizierender Signalverbindung mit den mehreren Unterdruckventilen steht und Positionsangaben empfängt, die eine Position des mindestens einen Laufwagens anzeigen, wobei die Steuerung dazu ausgelegt ist, jedes der mehreren Unterdruckventile basierend auf der Position des zumindest einen Laufwagens zu öffnen und zu schließen.

Vorteilhafterweise ist die Steuerung dazu ausgelegt, auf der Basis der Positionsangaben diejenigen der mehreren Unterdruckventile zu öffnen, die in fluider Verbindung mit dem Unterdruckanschluss des mindestens einen Laufwagens stehen.

Bevorzugt handelt es sich bei dem Antriebsmechanismus um einen elektromagnetischen Antriebsmechanismus, wobei die Steuerung die Positionsangaben von dem elektromagnetischen Antriebsmechanismus empfängt.

Gemäß einer weiteren bevorzugten Ausführungsform der vorliegenden Erfindung ist ein Abstand zwischen jeweils zwei der Unterdruckventile kleiner als eine Länge des Befestigungsabschnitts in einer Richtung der Förderstrecke, sodass der Unterdruckanschluss des Befestigungsabschnitts gleichzeitig mit zwei benachbarten Unterdruckventilen der mehreren Unterdruckventile in fluider Verbindung stehen kann. Mit anderen Worten bedeutet dies, dass der Unterdruckanschluss des Befestigungsabschnitts zu jedem Zeitpunkt der Bewegung des Laufwagens mit mindestens einem der Unterdruckventile in fluider Verbindung steht. Mit dem Ausdruck "Länge des Befestigungsabschnitts" ist insbesondere die Ausdehnung des Raumes innerhalb der Unterdruckdichtungen in Richtung der Förderstrecke gemeint. Ist nämlich der Abstand zwischen zwei Unterdruckventilen geringer als die Ausdehnung des durch die Unterdruckdichtungen abgedichteten Raumes in Richtung der Förderstrecke, so steht der Unterdruckanschluss des Befestigungsabschnitts bei bestimmten Positionen des Laufwagens gleichzeitig mit zwei zueinander benachbarten Unterdruckventilen in fluider Verbindung. Bewegt sich der Laufwagen weiter, so bleibt die fluide Verbindung mit zumindest einem Unterdruckventil auf jeden Fall so lange bestehen bis eine fluide Verbindung mit dem nächsten, in Richtung der Förderstrecke folgenden Unterdruckventil hergestellt ist.

Bevorzugt sind die Führungsschiene und die Förderstrecke vollständig umlaufend ausgebildet.

Die Förderstrecke umfasst vorteilhafterweise Arbeitsabschnitte und Nicht-Arbeitsabschnitte, wobei die mehreren Unterdruckventile nur entlang des Arbeitsabschnitts der Förderstrecke mit der Führungsschiene verbunden sind.

Bevorzugt ist mindestens ein Teil der mehreren Unterdruckventile dazu eingerichtet, den Unterdruckanschluss des mindestens einen Laufwagens mit einem variablen Maß an Unterdruck zu beaufschlagen.

Besonders bevorzugt umfasst die Unterdruckquelle einen Unterdruckverteilerkanal mit einer Vielzahl von Unterdruckleitungen, wobei sich jeweils eine Unterdruckleitung vom Unterdruckverteilerkanal zu jeweils einem der mehreren Unterdruckventile erstreckt.

Gemäß einer weiteren bevorzugten Ausführungsform der vorliegenden Erfindung sind mehrere Laufwagen vorgesehen, von denen jeder einen Befestigungsabschnitt aufweist, der verschiebbar mit der Führungsschiene in Eingriff steht, und wobei in dem Befestigungsabschnitt ein Unterdruckanschluss ausgebildet ist. Das Fördersystem ist dazu ausgelegt, die Unterdruckanschlüsse der Vielzahl von Laufwagen über mehreren Unterdruckventile unabhängig voneinander und selektiv mit Unterdruck zu versorgen, und zwar bei einer jeweils benachbarten Anordnung der Vielzahl von Laufwagen zu den entsprechenden Unterdruckventilen.

Bevorzugt handelt es sich bei dem Antriebsmechanismus um einen elektromagnetischner Antriebsmechanismus, der dazu ausgelegt ist, jeden der Vielzahl von Laufwagen unabhängig zu bewegen.
Die Figur 1 ist eine perspektivische Ansicht eines Teils eines Fördersystems gemäß einer Ausführungsform der vorliegenden Erfindung,
die Figur 2 ist eine Draufsicht auf eine Führungsschiene des Fördersystems der Figur 1,
die Figur 3 ist eine perspektivische Ansicht eines Laufwagens des Fördersystems der Figur 1;
die Figur 4 ist eine Draufsicht auf einen Befestigungsabschnitt des Laufwagens der Figur 3,
die Figur 5 ist eine teilweise auseinandergezogene perspektivische Ansicht des Befestigungsabschnitts der Figur 4,
die Figur 6 ist eine Schnittansicht des Befestigungsabschnitts des Laufwagens der Figur 4 entlang der Linie 6-6 und dargestellt mit einem Abschnitt der Führungsschiene der Figur 1,
die Figur 7 ist eine Aufrissdarstellung eines Abschnitts des Fördersystems der Figur 1, und
die Figur 8 ist eine schematische Darstellung von elektronischen Steuerungen des Fördersystems der Figur 1.

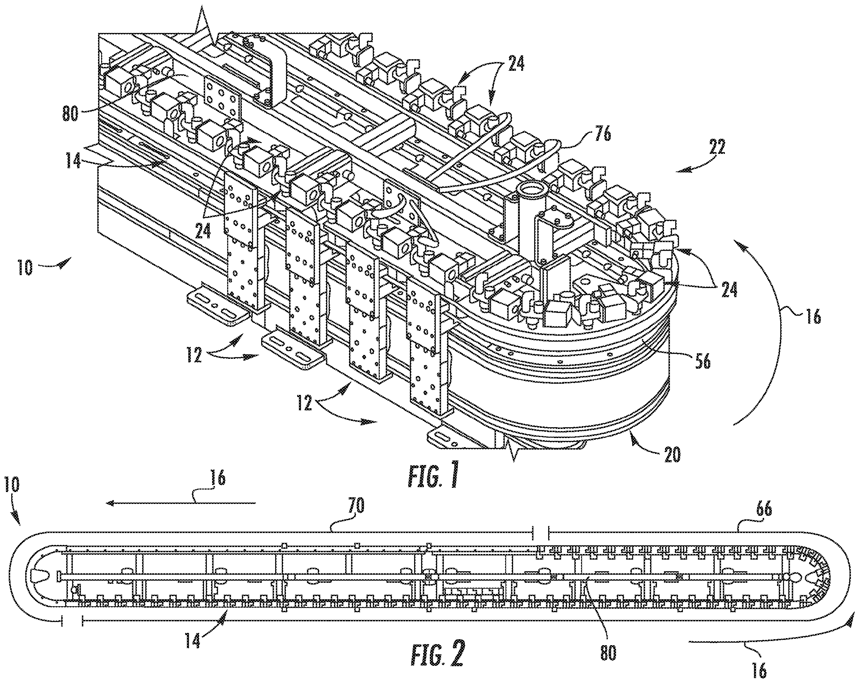

Bezug nehmend auf die Figuren 1 und 2 umfasst ein Fördersystem 10 gemäß einer Ausführungsform der vorliegenden Erfindung eine Vielzahl von Laufwagen 12, die an einer sich entlang einer Förderstrecke 16 erstreckenden Führungsschiene 14 verschiebbar gelagert sind. Über einen Antriebsmechanismus 20 sind die Laufwagen 12 entlang der Förderstrecke 16 verfahrbar. Ein Unterdruck-Teilsystem 22 versorgt die Laufwagen 12 während ihrer Bewegung entlang zumindest eines Abschnittes der Führungsschiene 14 selektiv mit Unterdruck. Das Unterdruck-Teilsystem 22 umfasst eine Vielzahl von Unterdruckventilen 24, die mit der Führungsschiene 14 verbunden sind und eine Unterdruckquelle (nicht gezeigt) führt den Unterdruckventilen 24 Unterdruck zu. Vorteilhafterweise liefert das Fördersystem 10 durch den Einsatz des Unterdruck-Teilsystems 22 über die Unterdruckventile 24 bei benachbarter Anordnung der Laufwagen 12 zu den Unterdruckventilen 24 selektiv Unterdruck aus der Unterdruckquelle 26 an die Laufwagen 12.

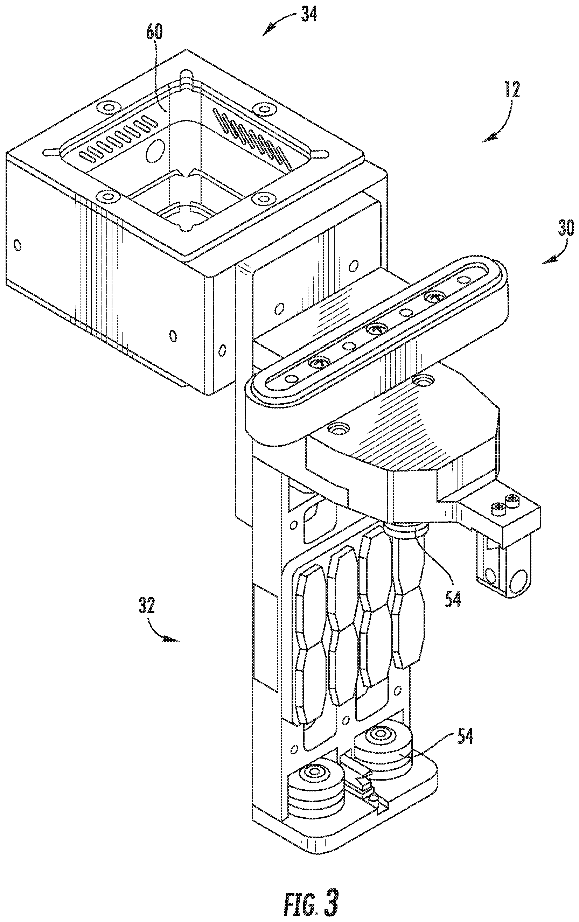

Bezug nehmend auf Figur 3 umfasst jeder Laufwagen 12 einen Befestigungsabschnitt 30, einen Antriebsmechanismus-Eingriffsabschnitt 32 und einen Werkstückhalteabschnitt 34. Der Befestigungsabschnitt 30 greift verschiebbar in die Führungsschiene 14 ein, während der Antriebsmechanismus-Eingriffsabschnitt 32 vom Antriebsmechanismus 20 in Eingriff genommen wird, um den Laufwagen 12 zu bewegen. Wenn der Laufwagen 12 ein Werkstück um mindestens einen Teil des Fördersystems 10 bewegen soll, ist der Werkstückhalteabschnitt 34 dazu eingerichtet, ein Werkstück (z.B. Verpackungsmaterial) lösbar daran zu befestigen.

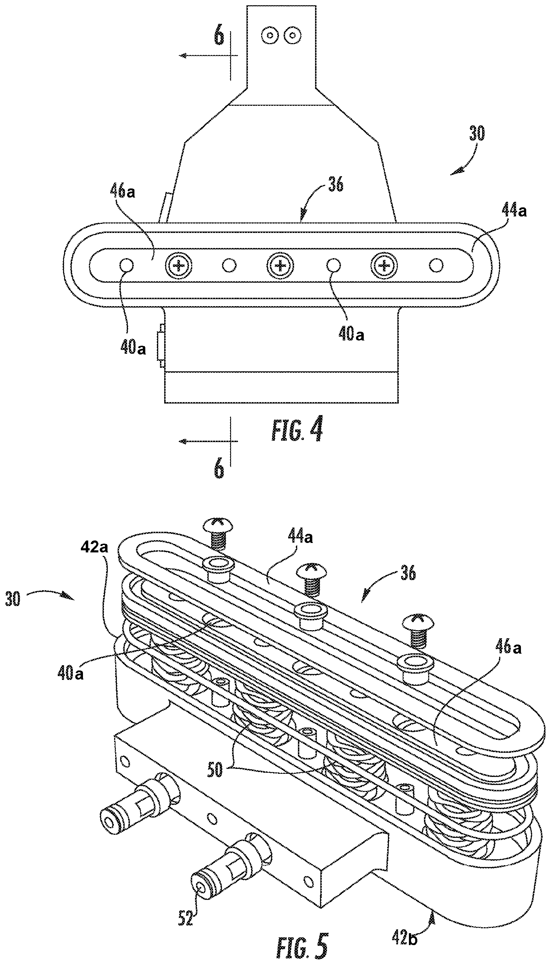

Ferner Bezug nehmend auf die Figuren 4 bis 6 ist in dem Befestigungsabschnitt 30 ein Unterdruckanschluss 36 zur Aufnahme von Unterdruck aus den Unterdruckventilen 24 in der Führungsschiene 14 und zum Zuführen in den Werkstückhalteabschnitt 34 ausgebildet. Der Unterdruckanschluss 36 umfasst eine Vielzahl von Unterdruckeinlässen 40a, 40b, die sich in gegenüberliegende Seiten 42a, 42b des Befestigungsabschnitts 30 erstrecken. Vorzugsweise sind die Unterdruckeinlässe 40a, 40b in jeweiligen Unterdruckdichtungen 44a (die eigentlich mit dem Bezugszeichen 44b zu bezeichnende gegenüberliegende Unterdruckdichtung ist nicht dargestellt) ausgebildet, die dichtend an der Führungsschiene 14 anliegen. Besonders bevorzugt befinden sich die Unterdruckeinlässe 40a, 40b und die Unterdruckdichtungen 44a an jeweiligen Unterdruckeinlassplatten 46a, 46b, die innerhalb der Seiten 42a, 42b des Befestigungsabschnitts 30 verschiebbar gelagert sind und durch Vorspannelemente 50 auseinander gezwungen und damit in Eingriff mit der Schiene 14 gebracht werden.

Der durch die Unterdruckeinlässe 40a, 40b eingeleitete Unterdruck wird über einen oder mehrere Unterdruckkanäle 52 aus dem Unterdruckanschluss 36 herausgeführt. Der Unterdruck gelangt über die Unterdruckkanäle 52 an den Werkstückhalteabschnitt 34. Die dargestellte Ausführungsform zeigt Doppelkanäle 52, es könnten jedoch auch mehr oder weniger Unterdruckkanäle 52 verwendet werden. Wenn beispielsweise der Werkstückhalteabschnitt 34 relativ zur Führungsschiene 14 drehbar sein soll, könnte zwischen dem Befestigungsabschnitt 30 und dem Werkstückhalteabschnitt 34 eine einzige drehbare Verbindung mit kollinearen Unterdruckkanälen hergestellt werden.

Erneut Bezug nehmend auf die Figur 3 ist der Antriebsmechanismus-Eingriffsabschnitt 32 jedes Laufwagens 12 je nach dem Typ des Antriebsmechanismus 20, der mit dem Fördersystem 10 verwendet wird, anpassbar. Obwohl in der dargestellten Ausführungsform der Antriebsmechanismus-Eingriffsabschnitt 32 zum Eingriff mit einem elektromagnetischen Antriebsmechanismus 20 ausgelegt ist, ist die vorliegende Erfindung nicht auf eine bestimmte Art von Antriebsmechanismus beschränkt. Vorteilhafterweise ist ein solcher elektromagnetischer Antriebsmechanismus 20 in der Lage, jeden Laufwagen 12 unabhängig von den anderen zu bewegen.

Darüber hinaus kann der Antriebsmechanismus-Eingriffsabschnitt 32 Rollen 54 zum Halten des Laufwagens 12 an einer weiteren Schiene/Führung 56 (siehe Figur 1) umfassen. In einer solchen Ausgestaltung, führt die Führungsschiene 14 den Laufwagen 12 Unterdruck zu, wird jedoch nicht dafür herangezogen, die Laufwagen 12 während der Bewegung entlang der Förderstrecke 16 physisch am Fördersystem 10 zu halten.

Der Werkstückhalteabschnitt 34 ist je nach Art des zu haltenden Werkstücks und der gewünschten Unterdruckbeaufschlagung anpassbar. In der dargestellten Ausführungsform ist der Werkstückhalteabschnitt 34 dazu eingerichtet, ein Werkstück unter Verwendung von Unterdruck zu halten. Der Werkstückhalteabschnitt 34 ist insbesondere dazu eingerichtet, ein Werkstück im Inneren eines Innendurchgangs 60 zu halten. Die vorliegende Erfindung ist jedoch nicht auf eine bestimmte Verwendung des einmal dem Laufwagen zugeführten Unterdrucks beschränkt.

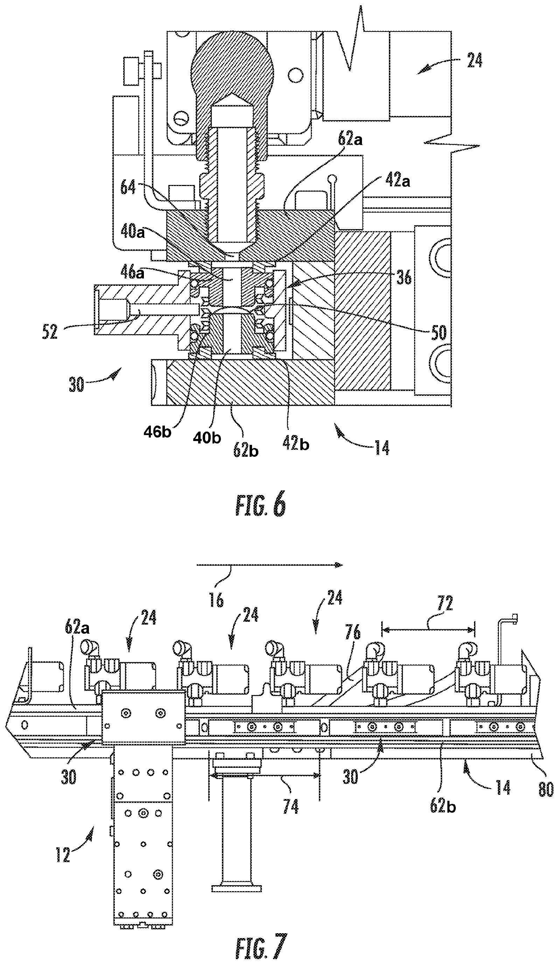

Mit Bezug auf die Figuren 6 und 7 umfasst die Führungsschiene 14 gegenüberliegende erste 62a und zweite 62b Führungsschienenflächen, die mit den gegenüberliegenden Seiten 42a, 42b des Befestigungsabschnitts 30 in Eingriff stehen. Die Unterdruckventile 24 sind vorzugsweise mit Öffnungen 64 verbunden, die sich durch die erste Führungsschienenfläche 62a erstrecken. Die Verwendung von gegenüberliegenden Führungsschienenflächen 62a, 62b und Seiten 42a, 42b des Befestigungsabschnitts ist vorteilhaft, da sie dazu beiträgt, die aus dem angelegten Unterdruck resultierenden Kräfte auszugleichen und folglich die zwischen der Führungsschiene 14 und dem Befestigungsabschnitt 30 erzeugten Bindungskräfte zu verringern, welche die Gleitbewegung der einzelnen Laufwagen 12 beeinträchtigen würden.

In der dargestellten Ausführungsform sind die Seiten 42a, 42b der Befestigungsabschnitte 30 zwischen den gegenüberliegenden Führungsschienenflächen 62a, 62b angeordnet, die vorliegende Erfindung ist jedoch nicht auf eine solche Ausgestaltung beschränkt. Beispielsweise könnte ein U-förmiger Befestigungsabschnitt einander gegenüberliegende Seiten aufweisen, zwischen denen sich eine Führungsschiene befindet. Zusätzlich ist die Führungsschiene 14, wie oben ausgeführt, nicht zwingend erforderlich, um die Laufwagen 12 zu halten. Obwohl bei der dargestellten Ausführungsform die Führungsschiene 14 zwischen den Unterdruckventilen 24 im Wesentlichen durchgehend ist, ist dies nicht zwingend erforderlich.

Auch auf die Figur 2 Bezug nehmend benötigen die Laufwagen möglicherweise den Unterdruck nicht über den gesamten Umlauf der Förderstrecke 16; beispielsweise können in der Förderstrecke 16 ein Arbeitsabschnitt 66 und ein Nicht-Arbeitsabschnitt 70 vorhanden sein. Wird von den Laufwagen im Nicht-Arbeitsabschnitt 70 kein Unterdruck benötigt (wenn z.B. kein zu haltendes Werkstück vorhanden ist), so kann beispielsweise nur entlang des Arbeitsabschnittes 66 die Vielzahl der Unterdruckventile 24 an die Führungsschiene 14 angeschlossen werden.

Wo Unterdruck benötigt wird, sind die Unterdruckventile 24 vorteilhaft in einem Abstand 72 angeordnet, der kleiner ist als eine Länge 74 des Befestigungsabschnitts 30 in Richtung der Förderstrecke 16. Somit kann der Unterdruckanschluss 36 des Befestigungsabschnitts gleichzeitig mit zwei benachbarten Unterdruckventilen 24 in fluider Verbindung stehen. Während sich jeder Laufwagen 12 entlang der Förderstrecke 16 bewegt, kann ein Unterdruck aus dem nächsten Ventil 24 erhalten werden, bevor Unterdruck aus dem vorhergehenden Ventil 24 verloren geht.

Die Unterdruckventile 24 werden vorzugsweise elektromagnetisch betrieben, sodass eine elektronische Steuerung, wie nachfolgend noch näher beschrieben wird, ermöglicht wird. Zusätzlich können alle oder ein Teil der Unterdruckventile 24 so ausgestaltet sein, dass sie ein variables Unterdruckniveau liefern - beispielsweise um eine Haltekraft, die auf ein Werkstück ausgeübt wird, vorübergehend zu reduzieren.

Die Unterdruckventile 24 sind gemeinsam jeweils über eine entsprechende Vielzahl von Unterdruckleitungen 76 (von denen der Übersichtlichkeit halber nur ein Teil dargestellt ist) mit der Unterdruckquelle (nicht gezeigt) verbunden. Vorteilhafterweise umfasst die Unterdruckquelle einen Unterdruckverteilerkanal 80, der entlang der Länge der Führungsschiene 14 verläuft und an den die Unterdruckleitungen 76 angeschlossen sind. Der Unterdruckverteilerkanal 80 kann mit einer Unterdruckpumpe oder dergleichen als Unterdruckquelle verbunden sein. Alternativ könnte mehr als eine unabhängige Unterdruckquelle genutzt werden, wobei beispielsweise ein Teil der Unterdruckventile 24 Unterdruck aus einer Quelle erhält und ein anderer Teil aus einer anderen Quelle.

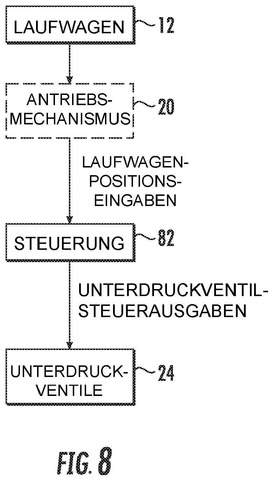

Bezug nehmend auf Figur 8 sind die Unterdruckventile 24 des Unterdruck-Teilsystems 22 vorzugsweise elektronisch mit einer Steuerung 82 (z.B. einer speicherprogrammierbaren Steuerung oder einer anderen Mikroprozessoreinrichtung) verbunden, die basierend auf Laufwagenpositionsangaben, jeweilige Steuerausgaben an die Unterdruckventile 24 liefert. Wenn die Steuerung 82 anhand der Positionsangaben feststellt, dass der Unterdruckanschluss 36 eines Laufwagens 12 in der Lage ist, mit einem Unterdruckventil 24 in fluide Verbindung zu gelangen, öffnet die Steuerung 82 das Unterdruckventil 24. Wenn kein Laufwagen 12 mit einem Unterdruckventil 24 in fluide Verbindung gelangen kann, sperrt die Steuerung 82 dieses Unterdruckventil 24. Die Steuerung 82 kann diese Vorgänge für mehrere Unterdruckventile 24 gleichzeitig durchführen.

Wird ein elektromagnetischer Antriebsmechanismus 20 verwendet, sodass der Antrieb den Standort jedes Laufwagens 12 unabhängig "kennt", können die Laufwagenpositionsangaben der Steuerung 82 von dem Antriebsmechanismus geliefert werden. Die Steuerung 82 könnte alternativ über andere Mittel Laufwagenpositionsangaben empfangen. Beispielsweise könnten den Positionen der Ventile 24 entsprechende Positionssensoren entlang der Führungsschiene angeordnet sein und Positionseingangssignale an die Steuerung 82 senden. Zusätzlich könnte auf eine zentrale Steuerung 82 verzichtet werden, wobei jedes Unterdruckventil 24 über eine mechanische, elektrische, magnetische etc. Anzeige, dass ein Laufwagen 12 benachbart zu diesem angeordnet ist, angesteuert wird.

Vorteilhafterweise kann ein Fördersystem 10 gemäß der vorliegenden Erfindung mehrere Laufwagen 12 während sie stillstehen, oder während sie sich entlang einer Förderstrecke 16 bewegen, mit Unterdruck versorgen. Indem Unterdruck nur zugeführt wird, wenn sich ein Laufwagen tatsächlich an einer Position befindet, an der er diesen aufnehmen kann, kann der mit der Unterdruckquelle verbundene Energiebedarf deutlich reduziert und die Leistung gesteigert werden.

## Patentansprüche

1. Fördersystem (10) aufweisend:
eine Führungsschiene (14), die sich entlang einer Förderstrecke (16) erstreckt;
mindestens einen Laufwagen (12) mit einem Befestigungsabschnitt (30), wobei der Befestigungsabschnitt (30) verschiebbar in die Führungsschiene (14) eingreift und wobei in dem Befestigungsabschnitt (30) ein Unterdruckanschluss (36) ausgebildet ist;
einen Antriebsmechanismus (20) zum Bewegen des mindestens einen Laufwagens (12) entlang der Förderstrecke (16);
mehrere Unterdruckventile (24), die mit der Führungsschiene (14) entlang der Förderstrecke (16) verbunden sind; und
eine Unterdruckquelle, die mit den mehreren Unterdruckventilen (24) verbunden ist, um diese mit Unterdruck zu versorgen;
wobei das Fördersystem (10) dazu ausgelegt ist, den Unterdruckanschluss (36) des mindestens einen Laufwagens (12) über die Unterdruckventile (24) selektiv mit Unterdruck zu versorgen, und zwar bei einer benachbarten Anordnung des mindestens einen Laufwagens (12) zu den Unterdruckventilen (24),
wobei die Führungsschiene (14) einander gegenüberliegende erste (62a) und zweite (62b) Führungsschienenflächen aufweist, die sich entlang der Förderstrecke (16) erstrecken, wobei der Befestigungsabschnitt (30) eine erste (42a) und eine zweite (42b) Seite aufweist, und die erste (42a) und die zweite (42b) sich gegenüberliegende Seite des Befestigungsabschnitts (30) jeweils verschiebbar in die erste (62a) beziehungsweise zweite (62b) Führungsschienenfläche eingreift,
**dadurch gekennzeichnet,**
**dass** der Unterdruckanschluss (36) gegenüberliegende erste (40a) und zweite (40b) Unterdruckeinlasse umfasst, wobei die ersten (40a) und zweiten (40b) Unterdruckeinlasse jeweils an der ersten (42a) beziehungsweise der zweiten (42b) Seite des Befestigungsabschnitts (30) angeordnet sind,
**dass** der Befestigungsabschnitt (30) sich gegenüberliegende erste (44a) und zweite Unterdruckdichtungen umfasst, die jeweils an der ersten Seite (42a) und der zweiten Seite (42b) des Befestigungsabschnitts (30) um die ersten (40a) und zweiten (40b) Unterdruckeinlasse herum angeordnet sind und mit der ersten (62a) beziehungsweise zweiten (62b) Führungsschienenfläche in Eingriff stehen,
und **dass** der Befestigungsabschnitt (30) ferner eine erste (46a) und eine zweite (46b) Unterdruckeinlassplatte umfasst, durch welche die ersten (40a) und zweiten (40b) Unterdruckeinlässe jeweils definiert sind, und auf denen die ersten (44a) und zweiten Unterdruckdichtungen jeweils gelagert sind, wobei die erste (46a) und die zweite (46b) Unterdruckeinlassplatte derart vorgespannt sind, um mit den ersten (62a) und zweiten (62b) Führungsschienenflächen in Eingriff zu gelangen.

2. Fördersystem (10) nach Anspruch 1, wobei die Führungsschiene (14) zwischen den mehreren Unterdruckventilen (24) im Wesentlichen durchgehend ausgebildet ist.

3. Fördersystem (10) nach Anspruch 1, wobei die mehreren Unterdruckventile (24) mit Öffnungen (64) verbunden sind, die sich durch die erste Führungsschienenfläche (62a) erstrecken.

4. Fördersystem (10) nach einem der Ansprüche 1 oder 3, wobei der Unterdruckanschluss (36) ferner gegenüberliegende dritte und vierte Unterdruckeinlässe umfasst, wobei die dritten und vierten Unterdruckeinlässe jeweils an der ersten (42a) beziehungsweise der zweiten (42b) Seite des Befestigungsabschnitts (30) angeordnet sind.

5. Fördersystem (10) nach einem der Ansprüche 3 bis 4, wobei die erste (42a) und die zweite (42b) Seite des Befestigungsabschnitts (30) verschiebbar zwischen der ersten (62a) und der zweiten (62b) Führungsschienenfläche aufgenommen sind.

6. Fördersystem (10) nach einem der vorhergehenden Ansprüche, wobei der mindestens eine Laufwagen (12) dazu ausgelegt ist, einen Unterdruck von dem Unterdruckanschluss (36) derart einzusetzen, um ein Werkstück lösbar an dem Laufwagen (12) zu befestigen.

7. Fördersystem (10) nach einem der vorhergehenden Ansprüche, ferner aufweisend eine Steuerung (82), wobei die Steuerung (82) in kommunizierender Signalverbindung mit den mehreren Unterdruckventilen (24) steht und Positionsangaben empfängt, die eine Position des mindestens einen Laufwagens (12) anzeigen, wobei die Steuerung (82) dazu ausgelegt ist, jedes der mehreren Unterdruckventile (24) basierend auf der Position des zumindest einen Laufwagens (12) zu öffnen und zu schließen.

8. Fördersystem nach Anspruch 7, wobei die Steuerung (82) dazu ausgelegt ist, auf der Basis der Positionsangaben diejenigen der mehreren Unterdruckventile (24) zu öffnen, die in fluider Verbindung mit dem Unterdruckanschluss (36) des mindestens einen Laufwagens (12) stehen.

9. Fördersystem (10) nach Anspruch 7 oder 8, wobei der Antriebsmechanismus (20) ein elektromagnetischer Antriebsmechanismus ist und wobei die Steuerung (82) die Positionsangaben von dem elektromagnetischen Antriebsmechanismus (20) empfängt.

10. Fördersystem (10) nach einem der vorhergehenden Ansprüche, wobei ein Abstand (72) zwischen jeweils zwei der Unterdruckventile (24) kleiner ist als eine Länge (74) des Befestigungsabschnitts (30) in einer Richtung der Förderstrecke (16), sodass der Unterdruckanschluss (36) des Befestigungsabschnitts (30) gleichzeitig mit zwei benachbarten Unterdruckventilen (24) der mehreren Unterdruckventile in fluider Verbindung stehen kann.

11. Fördersystem (10) nach einem der vorhergehenden Ansprüche, wobei die Führungsschiene (14) und die Förderstrecke (16) vollständig umlaufend ausgebildet sind.

12. Fördersystem (10) nach Anspruch 11, wobei die Förderstrecke (16) Arbeitsabschnitte (66) und Nicht-Arbeitsabschnitte (70) umfasst, wobei die mehreren Unterdruckventile (24) nur entlang des Arbeitsabschnitts (66) der Förderstrecke (16) mit der Führungsschiene (14) verbunden sind.

13. Fördersystem (10) nach einem der vorhergehenden Ansprüche, wobei mindestens ein Teil der mehreren Unterdruckventile (24) dazu eingerichtet ist, den Unterdruckanschluss (36) des mindestens einen Laufwagens (12) mit einem variablen Maß an Unterdruck zu beaufschlagen.

14. Fördersystem (10) nach einem der vorhergehenden Ansprüche, wobei die Unterdruckquelle einen Unterdruckverteilerkanal (80) mit einer Vielzahl von Unterdruckleitungen (76) umfasst, wobei sich jeweils eine Unterdruckleitung (76) vom Unterdruckverteilerkanal (80) zu jeweils einem der mehreren Unterdruckventile (24) erstreckt.

15. Fördersystem (10) nach einem der vorhergehenden Ansprüche, wobei mehrere Laufwagen (12) vorgesehen sind, von denen jeder einen Befestigungsabschnitt (30) aufweist, der verschiebbar mit der Führungsschiene (14) in Eingriff steht, und wobei in dem Befestigungsabschnitt (30) ein Unterdruckanschluss (36) ausgebildet ist; und wobei das Fördersystem (10) dazu ausgelegt ist, die Unterdruckanschlüsse (36) der Vielzahl von Laufwagen (12) über die mehreren Unterdruckventile (24) unabhängig voneinander und selektiv mit Unterdruck zu versorgen, und zwar bei einer jeweils benachbarten Anordnung der Vielzahl von Laufwagen (12) zu den entsprechenden Unterdruckventilen (24), wobei der Antriebsmechanismus (20) ein elektromagnetischer Antriebsmechanismus ist, der dazu ausgelegt ist, jeden der Vielzahl von Laufwagen (12) unabhängig zu bewegen.

## Claims

1. Conveyor system (10) having:
a guide rail (14), which extends along a conveying path (16) ;
at least one carriage (12) having a securing section (30), wherein the securing section (30) engages displaceably in the guide rail (14) and a vacuum connection (36) is formed in the securing section (30);
a drive mechanism (20) for moving the at least one carriage (12) along the conveying path (16);
a plurality of vacuum valves (24), which are connected to the guide rail (14) along the conveying path (16); and a vacuum source, which is connected to the plurality of vacuum valves (24) in order to supply the latter with vacuum;
wherein the conveyor system (10) is designed to supply vacuum selectively to the vacuum connection (36) of the at least one carriage (12) via the vacuum valves (24), and specifically when the at least one carriage (12) is arranged adjacent to the vacuum valves (24),
wherein the guide rail (14) has first (62a) and second (62b) guide rail surfaces opposite each other, which extend along the conveying path (16), wherein the securing section (30) has a first (42a) and a second (42b) side, and the first (42a) and the second (42b) opposite side of the securing section (30) respectively engage displaceably in the first (62a) and second (62b) guide rail surface,
**characterized**
**in that** the vacuum connection (36) comprises opposite first (40a) and second (40b) vacuum inlets, wherein the first (40a) and second (40b) vacuum inlets are each arranged on the first (42a) and the second (42b) side of the securing section (30) respectively,
**in that** the securing section (30) comprises opposite first (44a) and second vacuum seals, which are each arranged on the first side (42a) and the second side (42b) of the securing section (30) around the first (40a) and second (40b) vacuum inlets and engage with the first (62a) and second (62b) guide rail surface respectively, and
**in that** the securing section (30) further comprises a first (46a) and a second (46b) vacuum inlet plate, by which the first (40a) and second (40b) vacuum inlets are each defined and on which the first (44a) and second vacuum seals are each mounted, wherein the first (46a) and the second (46b) vacuum inlet plate are preloaded in such a way as to engage with the first (62a) and second (62b) guide rail surfaces.

2. Conveyor system (10) according to Claim 1, wherein the guide rail (14) is substantially continuous between the plurality of vacuum valves (24).

3. Conveyor system (10) according to Claim 1, wherein the plurality of vacuum valves (24) are connected to openings (64) which extend through the first guide rail surface (62a).

4. Conveyor system (10) according to one of Claims 1 or 3, wherein the vacuum connection (36) further comprises opposite third and fourth vacuum inlets, wherein the third and fourth vacuum inlets are each respectively arranged on the first (42a) and the second (42b) side of the securing section (30).

5. Conveyor system (10) according to one of Claims 3 to 4, wherein the first (42a) and the second (42b) side of the securing section (30) is displaceably accommodated between the first (62a) and the second (62b) guide rail surface.

6. Conveyor system (10) according to one of the preceding claims, wherein the at least one carriage (12) is designed to use a vacuum from the vacuum connection (36) in such a way as to secure a workpiece detachably to the carriage (12).

7. Conveyor system (10) according to one of the preceding claims, further having a controller (82), wherein the controller (82) has a communicating signal connection to the plurality of vacuum valves (24) and receives position information which indicates a position of the at least one carriage (12), wherein the controller (82) is designed to open and to close each of the plurality of vacuum valves (24) on the basis of the position of the at least one carriage (12).

8. Conveyor system according to Claim 7, wherein the controller (82) is designed to open those ones of the plurality of vacuum valves (24) which have a fluid connection to the vacuum connection (36) of the at least one carriage (12) on the basis of the position information.

9. Conveyor system (10) according to Claim 7 or 8, wherein the drive mechanism (20) is an electromagnetic drive mechanism, and wherein the controller (82) receives the position information from the electromagnetic drive mechanism (20).

10. Conveyor system (10) according to one of the preceding claims, wherein a distance (72) between each two of the vacuum valves (24) is shorter than a length (74) of the securing section (30) in a direction of the conveying path (16), so that the vacuum connection (36) of the securing section (30) can simultaneously be connected fluidically to two adjacent vacuum valves (24) of the plurality of vacuum valves.

11. Conveyor system (10) according to one of the preceding claims, wherein the guide rail (14) and the conveying path (16) are designed to form a complete circuit.

12. Conveyor system (10) according to Claim 11, wherein the conveying path (16) comprises working sections (66) and non-working sections (70), wherein the plurality of vacuum valves (24) are connected to the guide rail (14) only along the working section (66) of the conveying path (16) .

13. Conveyor system (10) according to one of the preceding claims, wherein at least some of the plurality of vacuum valves (24) are set up to apply a variable degree of vacuum to the vacuum connection (36) of the at least one carriage (12).

14. Conveyor system (10) according to one of the preceding claims, wherein the vacuum source comprises a vacuum distribution channel (80) having a large number of vacuum lines (76), wherein in each case a vacuum line (76) extends from the vacuum distribution channel (80) to respectively one of the plurality of vacuum valves (24) .

15. Conveyor system (10) according to one of the preceding claims, wherein a plurality of carriages (12) are provided, each of which has a securing section (30) which engages displaceably with the guide rail (14), and wherein a vacuum connection (36) is formed in the securing section (30); and wherein the conveyor system (10) is designed to supply vacuum to the vacuum connections (36) of the large number of carriages (12) via the plurality of vacuum valves (24) independently of one another and selectively, and specifically when the large number of carriages (12) are arranged adjacent to each of the corresponding vacuum valves (24), wherein the drive mechanism (20) is an electromagnetic drive mechanism, which is designed to move each of the large number of carriages (12) independently.

## Revendications

1. Système de transport (10) présentant :
un rail de guidage (14), qui s'étend le long d'un trajet de transport (16) ;
au moins un chariot (12) ayant une section de fixation (30), la section de fixation (30) s'engageant de manière coulissante dans le rail de guidage (14) et un raccord de dépression (36) étant réalisé dans la section de fixation (30) ;
un mécanisme d'entraînement (20) pour déplacer l'au moins un chariot (12) le long du trajet de transport (16) ;
plusieurs soupapes de dépression (24), qui sont reliées au rail de guidage (14) le long du trajet de transport (16) ; et
une source de dépression, qui est reliée aux plusieurs soupapes de dépression (24) pour leur fournir une dépression ;
le système de transport (10) étant conçu pour fournir sélectivement une dépression au raccord de dépression (36) de l'au moins un chariot (12) par l'intermédiaire des soupapes de dépression (24), et ce avec un agencement voisin de l'au moins un chariot (12) par rapport aux soupapes de dépression (24),
le rail de guidage (14) présentant des première (62a) et deuxième (62b) surfaces de rail de guidage opposées, qui s'étendent le long du trajet de transport (16), la section de fixation (30) présentant un premier (42a) et un deuxième (42b) côté, le premier (42a) et le deuxième (42b) côté opposés de la section de fixation (30) s'engageant respectivement de manière coulissante dans la première (62a) et la deuxième (62b) surface de rail de guidage,
**caractérisé en ce que**
le raccord de dépression (36) comprend des première (40a) et deuxième (40b) entrées de dépression opposées, les première (40a) et deuxième (40b) entrées de dépression étant agencées respectivement sur le premier (42a) et le deuxième (42b) côté de la section de fixation (30),
**en ce que** la section de fixation (30) comprend des premier (44a) et deuxième joints de dépression opposés, qui sont agencés respectivement sur le premier côté (42a) et le deuxième côté (42b) de la section de fixation (30) autour des première (40a) et deuxième (40b) entrées de dépression et en prise avec la première (62a) et deuxième (62b) surface de rail de guidage,
et **en ce que** la section de fixation (30) comprend en outre une première (46a) et une deuxième (46b) plaque d'entrée de dépression, qui définissent respectivement les première (40a) et deuxième (40b) entrées de dépression et supportent respectivement les premier (44a) et deuxième joints de dépression, la première (46a) et la deuxième (46b) plaque d'entrée de dépression étant précontraintes afin de venir en prise avec les première (62a) et deuxième (62b) surfaces de rail de guidage.

2. Système de transport (10) selon la revendication 1, dans lequel le rail de guidage (14) est réalisé essentiellement sous forme continue entre les plusieurs soupapes de dépression (24).

3. Système de transport (10) selon la revendication 1, dans lequel les plusieurs soupapes de dépression (24) sont reliées à des ouvertures (64) qui s'étendent à travers la première surface de rail de guidage (62a).

4. Système de transport (10) selon l'une quelconque des revendications 1 ou 3, dans lequel le raccord de dépression (36) comprend en outre des troisième et quatrième entrées de dépression opposées, les troisième et quatrième entrées de dépression étant agencées respectivement sur le premier (42a) et le deuxième (42b) côtés de la section de fixation (30).

5. Système de transport (10) selon l'une quelconque des revendications 3 à 4, dans lequel le premier (42a) et le deuxième (42b) côté de la section de fixation (30) sont reçus de manière coulissante entre la première (62a) et la deuxième (62b) surface de rail de guidage.

6. Système de transport (10) selon l'une quelconque des revendications précédentes, dans lequel l'au moins un chariot (12) est conçu pour appliquer une dépression à partir du raccord de dépression (36) de manière à fixer de manière amovible une pièce au chariot (12).

7. Système de transport (10) selon l'une quelconque des revendications précédentes, présentant en outre une commande (82), la commande (82) étant en communication de signal avec les plusieurs soupapes de dépression (24) et recevant des indications de position qui indiquent une position de l'au moins un chariot (12), la commande (82) étant conçue pour ouvrir et fermer chacune des plusieurs soupapes de dépression (24) sur la base de la position de l'au moins un chariot (12).

8. Système de transport selon la revendication 7, dans lequel la commande (82) est conçue pour ouvrir celles parmi les plusieurs soupapes de dépression (24) qui sont en communication fluidique avec le raccord de dépression (36) de l'au moins un chariot (12) sur la base des indications de position.

9. Système de transport (10) selon la revendication 7 ou 8, dans lequel le mécanisme d'entraînement (20) est un mécanisme d'entraînement électromagnétique et dans lequel la commande (82) reçoit les indications de position du mécanisme d'entraînement électromagnétique (20) .

10. Système de transport (10) selon l'une quelconque des revendications précédentes, dans lequel une distance (72) entre deux soupapes respectives des soupapes de dépression (24) est inférieure à une longueur (74) de la section de fixation (30) dans une direction du trajet de transport (16), de telle sorte que le raccord de dépression (36) de la section de fixation (30) peut être en communication fluidique simultanément avec deux soupapes de dépression voisines (24) des plusieurs soupapes de dépression.

11. Système de transport (10) selon l'une quelconque des revendications précédentes, dans lequel le rail de guidage (14) et le trajet de transport (16) sont réalisés entièrement circulaires.

12. Système de transport (10) selon la revendication 11, dans lequel le trajet de transport (16) comprend des sections de travail (66) et des sections de non-travail (70), dans lequel les plusieurs soupapes de dépression (24) sont reliées au rail de guidage (14) uniquement le long de la section de travail (66) du trajet de transport (16) .

13. Système de transport (10) selon l'une quelconque des revendications précédentes, dans lequel au moins une partie des plusieurs soupapes de dépression (24) est adaptée pour solliciter le raccord de dépression (36) de l'au moins un chariot (12) avec une mesure variable de dépression.

14. Système de transport (10) selon l'une quelconque des revendications précédentes, dans lequel la source de dépression comprend un canal de distribution de dépression (80) ayant une pluralité de conduites de dépression (76), une conduite de dépression respective (76) s'étendant depuis le canal de distribution de dépression (80) jusqu'à une soupape respective parmi les plusieurs soupapes de dépression (24).

15. Système de transport (10) selon l'une quelconque des revendications précédentes, dans lequel plusieurs chariots (12) sont prévus, dont chacun présente une section de fixation (30) qui est en prise de manière coulissante avec le rail de guidage (14), et dans lequel un raccord de dépression (36) est réalisé dans la section de fixation (30) ; et dans lequel le système de transport (10) est conçu pour fournir indépendamment et sélectivement une dépression aux raccords de dépression (36) de la pluralité de chariots (12) par l'intermédiaire des plusieurs soupapes de dépression (24), et ce avec un agencement voisin respectif de la pluralité de chariots (12) par rapport aux soupapes de dépression (24) correspondantes, dans lequel le mécanisme d'entraînement (20) est un mécanisme d'entraînement électromagnétique qui est conçu pour déplacer indépendamment chacun de la pluralité de chariots (12).
